# EUROPÄISCHE PATENTSCHRIFT

(11) **EP 1 831 976 B1**
(45) Veröffentlichungstag und Bekanntmachung des Hinweises auf die Patenterteilung: **12.09.2018**
(21) Anmeldenummer: 05817213.1
(22) Anmeldetag: 14.12.2005
(51) Int. Cl.: H02B 1/38

(54) **SCHLIEßVORRICHTUNG FÜR EINEN SCHALTSCHRANK**
CLOSING DEVICE FOR A SWITCHGEAR CABINET
DISPOSITIF DE FERMETURE POUR UNE ARMOIRE DE DISTRIBUTION

(30) Priorität: 27.12.2004 DE 102004063507
(43) Veröffentlichungstag der Anmeldung: 12.09.2007
(73) Patentinhaber: Siemens Aktiengesellschaft, 80333 München (DE)
(72) Erfinder: GOHLICKE, Kay, 04157 Leipzig (DE); HAAS, Volker, 06804 Muldenstein (DE); SCHMIDT, Mario, 04178 Leipzig (DE)
(86) Internationale Anmeldenummer: PCT/EP2005/056768
(87) Internationale Veröffentlichungsnummer: WO 2006/069916

(56) Entgegenhaltungen:
- EP-A- 0 807 740
- EP-A- 0 891 027
- DE-A1- 3 111 595
- US-A- 4 363 528
- US-A- 4 466 676
- US-A- 4 503 584

## Beschreibung

Die vorliegende Erfindung beschreibt eine Schließvorrichtung für einen Schrank, speziell für einen Schaltschrank, umfassend eine Tür mit einer ersten und einer zweiten Aufnahmeeinrichtung, eine Schließeinrichtung und eine Scharniereinrichtung.

Um einem Benutzer einen Zugang zum Innenraum eines Schaltschrankes oder einer Schaltanlage zu ermöglichen, sind an Schaltschränken oder an Schaltanlagen Türen angebracht. Meistens ist eine dieser Türen über eine Scharniereinrichtung mit dem Schaltschrank oder der Schaltanlage verbunden. Über eine ebenfalls an der Tür angebrachte Schließeinrichtung kann der Schaltschrank oder die Schaltanlage verschlossen werden.

Bei einer Aufstellung eines Schaltschrankes oder einer Schaltanlage ist bei begrenzten Räumlichkeiten die Anschlagseite der Tür zu beachten. Man spricht dabei vom rechts- bzw. linksseitigen Anschlag einer Tür. Das Beachten der Anschlagseite ist notwendig, damit sich die Tür trotz der begrenzten Räumlichkeiten gut öffnen lässt. Ebenso sollte darauf geachtet werden, dass die geöffnete Tür in Notsituationen kein Fluchthindernis darstellt. Es ist deshalb von Vorteil, wenn die Tür so ausgelegt ist, dass sie sich sowohl für den rechtsseitigen Anschlag als auch für den linksseitigen Anschlag an den Schaltschrank oder an die Schaltanlage anbringen lässt.

In der Druckschrift CH 487 575 ist ein Schaltschrank mit einer zugehörigen Tür beschrieben. Dabei weist der Schaltschrank links- und rechtsseitig mindestens eine Befestigungsöse auf. Entsprechende Aussparungen sind so an der Tür angebracht, dass die Befestigungsösen im geschlossenen Zustand der Tür in die Aussparungen hineinragen. Die Aussparungen sind bezüglich einer durch die Mitte der Tür senkrecht verlaufenden Achse symmetrisch zueinander. Durch den Einbau von mehreren Scharnierteilen an einer Befestigungsöse und innerhalb der zugehörigen Aussparung kann die Tür auf einer Seite so mit dem Schaltschrank verbunden werden, dass die Tür sich in Bezug auf den Schaltschrank drehen lässt, und somit ihre Funktion als Tür erfüllt. Auf ähnliche Weise kann die Tür durch Einbau mehrerer Schlossteile an einer Befestigungsöse und innerhalb der zugehörigen Aussparungen auf der anderen Seite mit einem Schloss versehen werden. Dabei ist es der Entscheidung des Benutzers überlassen, auf welcher Seite der Tür ein Scharnier und auf welcher ein Schloss eingebaut wird. Damit kann über die gleiche Tür sowohl ein linksseitiger als auch ein rechtsseitiger Anschlag ermöglicht werden.

In der Druckschrift GM 80 15 411 ist eine Schaltschranktür beschrieben, welche sowohl links- als auch rechtsseitig eine Schloss-Scharnier-Einrichtung aufweist. Durch das Einsetzen eines Scharnierzapfens kann eine Schloss-Scharnier-Einrichtung so ausgebildet werden, dass sie die Funktion eines Scharniers erfüllt. Ebenso lässt sich durch ein Ersetzen des Scharnierzapfens mit einem Schlosszapfen eine Schloss-Scharnier-Einrichtung in ein Schloss umwandeln. Damit ist auch bei einer Schaltschranktür nach dem Gebrauchsmuster GM 80 15 411 ein links- oder rechtsseitiger Anschlag für die gleiche Tür ermöglicht.

Allerdings ist bei den Türen für Schaltschränke, welche in den beiden Druckschriften CH 487 575 und GM 80 15 411 beschrieben werden, das Umwandeln von einer linksanschlagenden Tür in eine rechtsanschlagende Tür mit dem Einfügen von Änderungen in das Scharnier und in das Schloss der Tür verbunden. Dies wiederum setzt genaue Kenntnisse über den Aufbau und die Funktionsweise von dem Schloss und dem Scharnier voraus und ist zusätzlich vergleichsweise zeitaufwändig.

Aus der EP 0 891 027 A1 ist weiter ein Schaltschrank bekannt, an dem links und rechts an einer Tür jeweils oben und unten gleichartige Elemente eingesetzt sind, von denen jeweils ein Zapfen wegsteht, der in eine zugehörige Aussparung in dem Schaltschrank eingreift. Die Zapfen sind durch einen Mechanismus zurückziehbar. Dieser Mechanismus wird dann aktivierbar, wenn an die beiden Elemente links oder an die beiden Elemente rechts ein Betätigungselement angebracht wird. Dort, wo dieses Betätigungselement angebracht wird und betätigt wird, lassen sich die Zapfen wie ein Riegel eines Schlosses zurückziehen. Dort, wo kein Betätigungselement angebracht ist, verbleiben die Zapfen in der Aussparung in dem Schaltschrank und dienen als Schwenkzapfen.

Die Aufgabe der Erfindung liegt deshalb darin, eine Schließvorrichtung zu finden, bei der eine Änderung der Anschlagseite einfacher durchzuführen ist.

Die Aufgabe wird erfindungsgemäß dadurch gelöst, dass die Schließeinrichtung als ein Schließmodul und die Scharniereinrichtung als ein Scharniermodul ausgeführt sind, dass die erste und die zweite Aufnahmeeinrichtung als Aussparungen ausgebildet sind, welche jeweils die gleiche Form aufweisen und zur Aufnahme sowohl des Schließmoduls als auch des Scharniermoduls geeignet sind, dass das Schließmodul einen ersten Befestigungseinsatz umfasst, der so geformt ist, dass er in jede der Aussparungen eingefügt werden kann, und dass das Scharniermodul ebenfalls einen zugehörigen Befestigungseinsatz aufweist, der so ausgelegt ist, dass er sich in eine Aussparung einfügen lässt.

Dabei weist die Scharniereinrichtung als Scharniermodul die komplette Funktionalität eines Scharniers auf. Auch die Schließeinrichtung ist so ausgelegt, dass sie alle beweglichen Teile eines Schlosses aufweist. Die Tür selbst umfasst keine beweglichen Teile und steht auch nicht mit beweglichen Teilen in einer direkten Verbindung. In einer besonderen Ausführungsform der Scharnier- und der Schließeinrichtung sind weder an der Tür noch an den Schrankrahmen des Schrankes Befestigungsösen angebracht.

Durch die modulare Bauweise wird gewährleistet, dass sich Scharnier- und Schließeinrichtung leicht gegeneinander austauschen lassen. Da dies ohne einen Eingriff in die Scharnier- oder Schließeinrichtung geschieht, sind dazu genaue Kenntnisse bezüglich der Scharnier- oder der Schließeinrichtung für den Benutzer nicht notwendig.

Erfindungsgemäß kann die erste Aufnahmeeinrichtung bezüglich einer vertikal durch die Tür verlaufenden Achse symmetrisch zu der zweiten Aufnahmeeinrichtung angeordnet sein. Dadurch wird es möglich, eine erfindungsgemäße Schließvorrichtung in wenigen, leicht auszuführenden Arbeitsschritten von einer rechtsschließenden in eine linksschließende Schließvorrichtung umzubauen.

Die erste und/oder die zweite Aufnahmeeinrichtung sind als mindestens eine Aussparung der Tür ausgeführt. Mit dieser mindestens einen Aussparung lässt sich auf einfache Weise eine Schließeinrichtung oder Scharniereinrichtung an der Tür befestigen.

Die Schließeinrichtung weist einen ersten Betfestigungseinsatz und ein Schließelement und die Scharniereinrichtung einen zweiten Befestigungseinsatz und ein Scharnierelement auf. Damit ist ein schnelles An- und Abmontieren des Schließelements und des Scharnierelements gewährleistet.

Die Schließeinrichtung kann beispielsweise einen Einzelverschluss, einen Mehrfachverschluss oder einen Stangenverschluss besitzen. Allerdings sind dies nur ein paar Beispiele für mögliche Schließungen, auch weitere, hier nicht aufgezählte Schließungen können für die erfindungsgemäße Schließvorrichtung verwendet werden. Dem Hersteller einer erfindungsgemäßen Schließvorrichtung bietet sich damit eine breite Auswahl an möglichen Schließeinrichtungen an. Ebenso hat der Hersteller eine große Auswahl an verwendbaren Befestigungseinsätzen und an verwendbaren Scharnierelementen.

Die vorliegende Erfindung wird nun anhand der beigefügten Zeichnungen näher erläutert, in denen zeigen:
- FIG 1: eine erfindungsgemäße Schließvorrichtung;
- FIG 2: eine Tür mit mehreren zueinander symmetrisch liegenden Aussparungen; und
- FIG 3: eine Tür mit mehreren zueinander symmetrisch liegenden Einsatzhaken.

Die nachfolgend näher geschilderten Ausführungsbeispiele stellen bevorzugte Ausführungsformen der vorliegenden Erfindung dar.

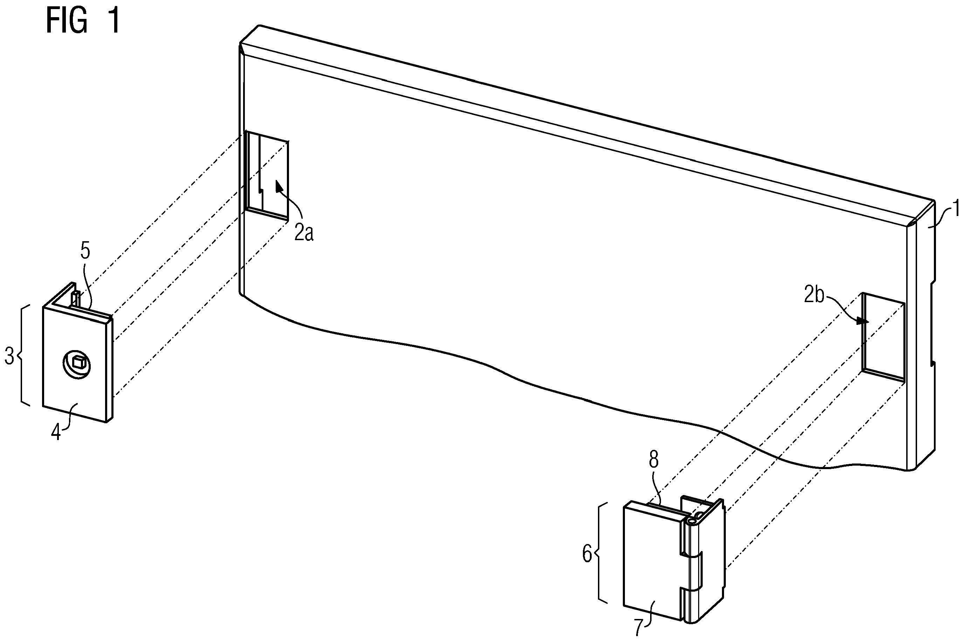

Die erfindungsgemäße Schließvorrichtung aus FIG 1 umfasst eine Tür 1, ein Schließmodul 3 und ein Scharniermodul 6. Nicht in FIG 1 eingezeichnet ist der Schaltschrank oder die Schaltanlage woran die Tür befestigbar ist.

Die Tür 1 weist zwei Aussparungen 2a und 2b auf. Dabei hat die Aussparung 2a die gleiche Form wie die Aussparung 2b. Zusätzlich sind die Aussparungen 2a und 2b zueinander bezüglich einer durch die Mitte der Tür 1 vertikal verlaufende Achse symmetrisch.

Das Schließmodul 3 umfasst einen Befestigungseinsatz 4 und ein Schließelement 5. Der Befestigungseinsatz 4 ist so geformt, dass er in jede der beiden Aussparungen 2a und 2b eingefügt werden kann. Das Schließelement 5 ist dann über den Befestigungseinsatz 4 und die Aussparung 2a oder 2b an der Tür 1 befestigt.

Das Schließelement 5 umfasst alle beweglichen Teile eines Schlosses. An der Tür 1 selbst oder am in FIG 1 nicht eingezeichneten Schrankrahmen sind keine beweglichen Teile eines Schlosses angebracht.

Das Scharniermodul 6 weist ebenfalls einen Befestigungseinsatz 7 auf. Auch dieser Befestigungseinsatz 7 ist so ausgelegt, dass er sich sowohl in die Aussparung 2a als auch in die Aussparung 2b einfügen lässt. Ebenso ist an dem Befestigungseinsatz 7 ein Scharnierelement 8 befestigt. Über den Befestigungseinsatz 7 lässt sich das Scharnierelement 8 an der Tür befestigen. Des Weiteren lässt sich das Scharnierelement 8 über eine in FIG 1 nicht eingezeichnete Befestigungsstelle an dem Schaltschrank befestigen. Damit ist es möglich, die Tür 1 über das Scharnierelement 8 bezüglich des Schaltschranks in einer Drehbewegung zu bewegen.

Das Scharnierelement 8 hat die komplette Funktionalität eines Scharniers. Es weist alle zueinander beweglichen Komponenten eines Scharniers auf. Wie beim Betrachten der FIG 1 zu erkennen ist, umfasst die Tür 1 selbst keine beweglichen Teile eines Scharniers und steht auch nicht mit einem beweglichen Teil eines Scharniers in direkter Verbindung.

Die beiden Aussparungen 2a und 2b und die beiden Befestigungseinsätze 4 und 7 sind beispielsweise so zueinander ausgelegt, dass jeder der beiden Befestigungseinsätze 4 und 7 über eine leichte Druckausübung in eine der beiden Aussparungen 2a oder 2b eingefügt werden kann. Die Aussparungen 2a und 2b sind so ausgelegt, dass ein eingefügter Befestigungseinsatz 4 oder 7 innerhalb der Aussparung 2a oder 2b gehalten wird. Erst wenn ein Benutzer einen vorgegebenen Druck auf einen Befestigungseinsatz 4 oder 7 ausübt, löst sich der Befestigungseinsatz wieder aus der jeweiligen Aussparung 2a oder 2b.

Allerdings ist die hier vorgestellte Befestigungsart nur ein Beispiel für eine verwendbare Befestigungsart. Möglich wäre auch ein Anschrauben des Befestigungseinsatz an der Tür über eine dazu ausgelegte Aussparung oder ein Festkleben über eine an der Tür angebrachte Klebevorrichtung. Auch unter Verwendung von einem oder mehreren Magneten kann ein dazu ausgelegter Befestigungseinsatz an einer Tür befestigbar sein.

Um das Schließelement 5 oder das Scharnierelement 8 von einer Seite der Tür 1 auf die andere Seite zu versetzen, ist es in dem Beispiel aus FIG 1 ausreichend, den Befestigungseinsatz 4 oder 7 mit dem daran befestigten Schließ- oder Scharnierelement 5 oder 8 aus einer Aussparung 2a oder 2b herauszudrücken und dann den jeweiligen Befestigungseinsatz 4 oder 7 in die andere Aussparung 2a oder 2b einzufügen. Die Verwendung von Werkzeugen oder genauere Kenntnisse über den Aufbau und die Funktionsweise des Schließelements 5 oder des Scharnierelements 8 sind dazu nicht nötig.

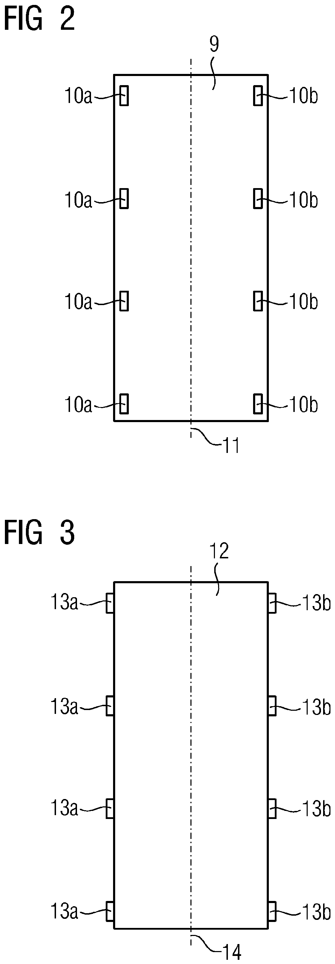

In FIG 2 ist ein weiteres Beispiel für eine Tür 9 einer erfindungsgemäßen Schließvorrichtung gezeigt. Dabei weist die Tür 9 insgesamt acht Aussparungen 10a und 10b auf. Die vier Aussparungen 10a sind auf der linken Seite der Tür 9 und die vier Aussparungen 10b sind auf der rechten Seite angebracht. Jede dieser Aussparungen 10a und 10b weist eine gleiche Form auf. Die Aussparungen 10a sind dabei bezüglich einer vertikal durch die Mitte der Tür verlaufenen Symmetrieachse 11 symmetrisch zu den Aussparungen 10b.

Die in FIG 2 nicht eingezeichnete Schließvorrichtung kann entweder über die Aussparungen 10a oder über die Aussparungen 10b an der jeweiligen Seite der Tür 9 angebracht werden. Dabei kann die Schließeinrichtung beispielsweise Einzelverschlüsse, Mehrfachverschlüsse oder einen Stangenverschluss aufweisen. Auch die in FIG 2 ebenfalls nicht eingezeichnete Scharniereinrichtung kann entweder über die Aussparungen 10a oder über die Aussparungen 10b an der Tür 9 befestigt werden.

In FIG 3 ist ein weiteres Beispiel für eine Tür 12 einer erfindungsgemäßen Schließvorrichtung gezeigt. Dabei weist die Tür 12 als Alternative zu den in FIG 2 gezeigten Aussparungen 10a und 10b acht Befestigungsöffnungen 13a und 13b auf. Die vier Befestigungsöffnungen 13a sind an der linken Seite der Tür 12 außen angebracht, die vier Befestigungsöffnungen 13b sind an der rechten Seite befestigt. Alle Befestigungsöffnungen 13a und 13b sind zueinander identisch. Zusätzlich sind die Befestigungsöffnungen 13a bezüglich einer vertikalen Symmetrieachse 14 durch die Mitte der Tür 12 symmetrisch zu den Befestigungsöffnungen 13b.

Über die vier Befestigungsöffnungen 13a oder über die vier Befestigungsöffnungen 13b lässt sich eine in FIG 3 nicht eingezeichnete Scharniereinrichtung an der Tür 12 befestigen. Ebenso kann eine in FIG 3 ebenfalls nicht eingezeichnete Schließeinrichtung entweder über die Befestigungsöffnungen 13a oder über die Befestigungsöffnungen 13b an der Tür 12 befestigt werden. Auch für diese Schließeinrichtung bieten sich Einzelverschlüsse, Mehrfachverschlüsse oder Stangenverschlüsse als Schließelemente an.

### Bezugszeichenliste

- 1, 9, 12: Tür
- 2a, 2b, 10a, 10b: Aussparungen
- 3: Schließeinrichtung
- 4, 7: Befestigungseinsätze
- 5: Schließelement
- 6: Scharniereinrichtung
- 8: Scharnierelement
- 11, 14: Symmetrieachse
- 13a, 13b: Befestigungsöffnungen

## Patentansprüche

1. Schließvorrichtung für einen Schrank, insbesondere für einen Schaltschrank, umfassend
- eine Tür (1, 9, 12) mit einer ersten und einer zweiten Aufnahmeeinrichtung (2a, 2b, 10a, 10b, 13a, 13b),
- eine Schließeinrichtung (3) und
- eine Scharniereinrichtung (6),
**dadurch gekennzeichnet, dass**
- die Schließeinrichtung (3) als ein Schließmodul (3) und die Scharniereinrichtung (6) als ein Scharniermodul (6) ausgeführt sind,
- die erste und die zweite Aufnahmeeinrichtung (2a, 2b, 10a, 10b, 13a, 13b) als Aussparungen (2a, 2b, 10a, 10b, 13a, 13b) ausgebildet sind, welche jeweils die gleiche Form aufweisen und zur Aufnahme sowohl des Schließmoduls (3) als auch des Scharniermoduls (6) geeignet sind,
- das Schließmodul (3) einen ersten Befestigungseinsatz (4) umfasst, der so geformt ist, dass er in jede der Aussparungen (2a, 2b, 10a, 10b, 13a, 13b) eingefügt werden kann, und
- das Scharniermodul (6) ebenfalls einen zugehörigen Befestigungseinsatz (7) aufweist, der so ausgelegt ist, dass er sich in eine Aussparung (2a, 2b, 10a, 10b, 13a, 13b) einfügen lässt.

2. Schließvorrichtung nach Anspruch 1, wobei die erste Aufnahmeeinrichtung (2a, 10a, 13a) bezüglich einer vertikal durch die Tür verlaufenden Achse (11, 14) symmetrisch zu der zweiten Aufnahmeeinrichtung (2b, 10b, 13b) angeordnet ist.

3. Schließvorrichtung nach einem der Ansprüche 1 oder 2, wobei die Schließeinrichtung (3) ein Schließelement (5) aufweist.

4. Schließvorrichtung nach einem der vorhergehenden Ansprüche, wobei die Scharniereinrichtung (6) ein Scharnierelement (8) aufweist.

5. Schließvorrichtung nach einem der vorhergehenden Ansprüche, wobei die Schließeinrichtung (3) einen Einzelverschluss, einen Mehrfachverschluss oder einen Stangenverschluss besitzt.

## Claims

1. Closing apparatus for a cabinet, in particular for a switchgear cabinet, comprising
- a door (1, 9, 12) with a first and a second receiving device (2a, 2b, 10a, 10b, 13a, 13b),
- a closing device (3) and
- a hinge device (6),
**characterized in that**
- the closing device (3) is designed as a closing module (3) and the hinge device (6) is designed as a hinge module (6),
- the first and the second receiving devices (2a, 2b, 10a, 10b, 13a, 13b) are formed as cutouts (2a, 2b, 10a, 10b, 13a, 13b) which in each case have the same shape and are suitable for receiving both the closing module (3) and the hinge module (6),
- the closing module (3) comprises a first fastening insert (4) which is formed such that it can be inserted into each of the cutouts (2a, 2b, 10a, 10b, 13a, 13b), and
- the hinge module (6) likewise has an associated fastening insert (7) which is designed such that it can be inserted into a cutout (2a, 2b, 10a, 10b, 13a, 13b).

2. Closing apparatus according to Claim 1, wherein the first receiving device (2a, 10a, 13a) is arranged symmetrically in Vertraulich
relation to the second receiving device (2b, 10b, 13b) with respect to an axis (11, 14) which runs vertically through the door.

3. Closing apparatus according to one of Claims 1 and 2, wherein the closing device (3) has a closing element (5).

4. Closing apparatus according to one of the preceding claims, wherein the hinge device (6) has a hinge element (8).

5. Closing apparatus according to one of the preceding claims, wherein the closing device (3) has an individual closure, a multiple closure or a rod-type closure.

## Revendications

1. Système de fermeture d'une armoire, notamment d'une armoire de distribution, comprenant
- une porte (1, 9, 12), ayant un premier et un deuxième dispositifs (2a, 2b, 10a, 10b, 13a, 13b) de réception,
- un dispositif (3) de fermeture et
- un dispositif (6) de charnière,
**caractérisé en ce que**
- le dispositif (3) de fermeture est réalisé sous la forme d'un module (3) de fermeture et le dispositif (6) de charnière sous la forme d'un module (6) de charnière,
- le premier et le deuxième dispositifs (2a, 2b, 10a, 10b, 13a, 13b) de réception sont constitués sous la forme d'évidements (2a, 2b, 10a, 10b, 13a, 13b), qui ont chacun la même forme et qui sont propres à la réception tant du module (3) de fermeture que du module (6) de charnière,
- le module (3) de fermeture comprend un premier insert (4) de fixation, conformé de manière à pouvoir être inséré dans chacun des évidements (2a, 2b, 10a, 10b, 13a, 13b) et
- le module (6) de charnière a également un insert (7) de fixation associé, conçu de manière à pouvoir être inséré dans un évidement (2a, 2b, 10a, 10b, 13a, 13b).

2. Système de fermeture suivant la revendication 1, dans lequel le premier dispositif (2a, 10a, 13a) de réception est disposé par rapport à un axe (11, 14) s'étendant verticalement dans la porte, symétriquement par rapport au deuxième dispositif (2b, 10b, 13b) de réception.

3. Système de fermeture suivant l'une des revendication 1 ou 2, dans lequel le dispositif (3) de fermeture a un élément (5) de fermeture.

4. Système de fermeture suivant l'une des revendications précédentes, dans lequel le dispositif (6) de charnière a un élément (8) de charnière.

5. Système de fermeture suivant l'une des revendications précédentes, dans lequel le dispositif (3) de fermeture possède une fermeture unique et une fermeture multiple ou une fermeture à barre.
